**Europäisches Patentamt**

**European Patent Office**

**Office européen des brevets**

(19)

(11) Veröffentlichungsnummer: **0 195 279**
**A2**

(12) # EUROPÄISCHE PATENTANMELDUNG

(21) Anmeldenummer: **86102414.9**

(22) Anmeldetag: **25.02.86**

(51) Int. Cl.⁴: **F 25 B 49/00**
**F 25 B 15/02**

(30) Priorität: **06.03.85 DE 3507887**

(43) Veröffentlichungstag der Anmeldung:
**24.09.86 Patentblatt 86/39**

(84) Benannte Vertragsstaaten:
**AT CH DE LI NL**

(71) Anmelder: **M A N Technologie GmbH**
**Dachauer Strasse 667**
**D-8000 München 50(DE)**

(72) Erfinder: **Kreutmair, Josef**
**Tegernbacher Strasse 25**
**D-8068 Pfaffenhofen(DE)**

(54) **Verfahren zur Regelung von Absorptions-Kälteanlagen oder Wärmepumpen.**

(57) Verfahren zur regelung von Sorptions-Kälteanlagen oder- Wärmepumpen durch eine Regelung (10) der Kältemittelzufuhr in den Verdampfer (11) der Anlage, in Abhängigkeit der Temperatur und dem Druck ($t_{\ddot{u}}$) der aus dem Verdampfer austretenden Dämpfe derart, daß eine geringfügige Überhitzung dieser Dämpfe auftritt. Gleichzeitig wird die Kocherleistung ($Q_k$) in Abhängigkeit der aus dem Kocher austretenden Kältemittel Dampftemperatur geregelt. Die köhlleistung für die ausgetriebenen Kältemitteldämpfe wird mittels der reichen Lösung erbracht, wobei der Dephlegmator (3,4) zweistufig ausgebildet ist und der Lösungskühlkreis durch einen Zwischenkühler (6) zur Verstärkung des Rektiffikationsprozesses bei ungünstigen Randbedingungen durchgeführt ist.

Zeichnung der Anmeldungsunterlagen.

EP 0 195 279 A2

0195279

M.A.N. MASCHINENFABRIK AUGSBURG-NÜRNBERG
Aktiengesellschaft
gü/sd

München, 05. März 1985

Verfahren zur Regelung von Absorptions-Kältenanlagen oder- Wärmepumpen

Die Erfindung bezieht sich auf ein Verfahren zur Regelung von Absorptions-Kälteanlagen oder- Wärmepumpen sowie auf solche Anlagen mit einem Kältemittel- und einem Lösungskreislauf, sowie mit einem Kühlmediumkreislauf, der einen Kondensator und einen Absorber durchströmt, bei dem zur Anpassung an den Leistungsbedarf die Kältemittelzufuhr zum Verdampfer in Abhängigkeit des Zustandes im Verdampfer und der Rücklauf der armen Lösung zum Absorber geregelt werden und wobei zur Kühlung der aus dem Austreiber aufsteigenden Kühlmitteldämpfe die angereicherte Lösung aus dem Absorber verwendet wird und die Kocherleistung anpaßbar ist.

Sorptionsmaschinen erfordern aufgrund deren unterschiedlichen Arbeitsmittelkreisläufe eine sorgfältige, gleichzeitige Regelung verschiedener Prozessabläufe unter Beachtung äußerer Einflußparameter, wie die Außenluft- und die Anergiequellentemperatur, die Kocherheizleistung sowie die geforderten Kühl- bzw. Heizleistungen.

7.2287

Um möglichst günstige Prozessbedingungen zu erreichen, wird versucht, eine weitgehend selbsttätige Regelung von zumindest Teilvorgängen des Arbeitsprozesses zu erreichen.

Aus der DE-A 718 956 ist ein Verfahren gemäß der eingangs erwähnten Gattung bekannt, die auf eine Regelung von Absorptions-Kälteanlagen abgestellt ist, mit der in Abhängigkeit von der durchlaufenden Menge bzw. von der gewünschten tiefsten Temperatur des zu kühlenden Stoffes die Kälteanlage in ihrer Leistung beeinflußt wird.

Eine weitgehende Übereinstimmung der Kälteleistung mit dem Kältebedarf wird bei dem bekannten Verfahren dadurch erreicht, daß gleichzeitig die Kocherheizleistung, die Kühlleistung im Rektifikator bzw. Dephlegmator, die Kältemittelzufuhr zum Verdampfer und der Lösungskreislauf geregelt werden, wobei die Menge der dem Austreiber zugeführten reichen Lösung von der Endtemperatur oder der Menge eines zu kühlenden Stoffes abhängt. Diese Regeleingriffe, die selbsttätig erfolgen und durch eine für den Arbeitsprozeß maßgebliche Betriebsgröße, wie Temperatur, Druck und Flüssigkeitsstand ausgelöst werden, sind jedoch nur auf den Kältebetrieb einer Sorptionsanlage abgestellt.

Der Erfindung liegt die Aufgabe zugrunde, ein Verfahren der eingangs genannten Art mit einer selbsttätigen Regelung von Sorptionsanlagen zu finden, die sowohl für den Kälte- als auch den Wärmepumpenbetrieb geeignet ist.

Die Aufgabe wird erfindungsgemäß mit den im Anspruch 1 gekennzeichneten Merkmalen gelöst.

7.2287
05.03.1985

0195279

Damit ist eine selbsttätige Regelung des Arbeitsprozesses geschaffen, mit der der Prozeß bei einer Veränderung der äußeren Einflüsse rasch von selbst wieder stabilisiert wird, unabhängig davon, ob die Anlage zur Kühlung oder Erwärmung von Räumen verwendet wird.

Die Erfindung erstreckt sich auf eine Sorptionsanlage gemäß Anspruch 2. Eine derartige Anlage erfordert nur sehr wenige zusätzliche Bauteile, die einen Betrieb der Anlage mit hoher Leistungsfähigkeit bzw. Wärmeverhältnis erlaubt.

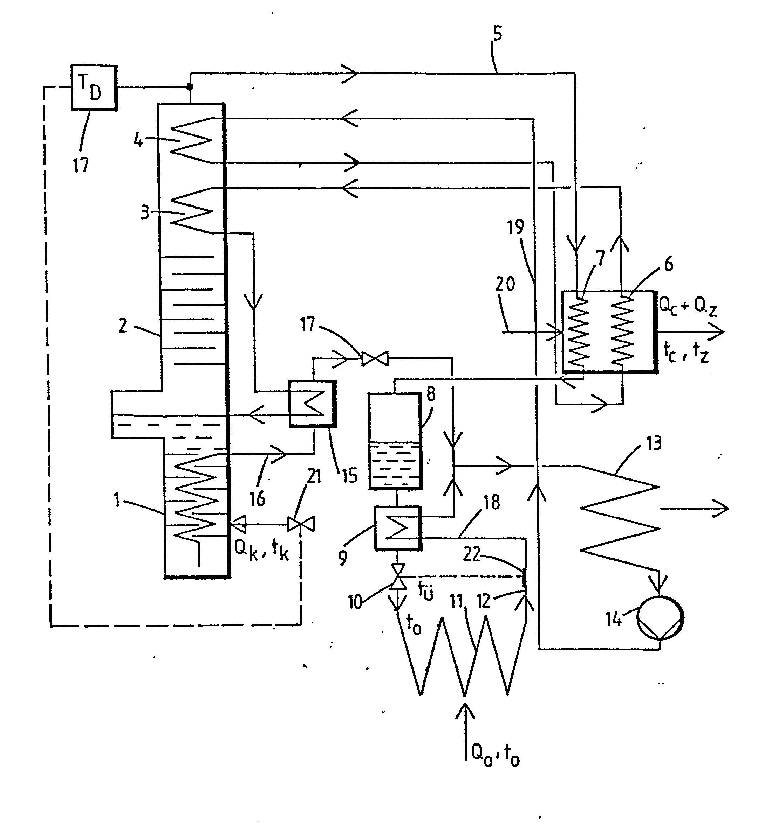

Die Erfindung wird nachfolgend anhand eines in der Zeichnung schematisch dargestellten Ausführungsbeispieles näher erläutert.

In der Zeichnung ist ein Schema einer Absorptionsanlage dargestellt. Eine Lösung aus Wasser und Ammoniak wird in einem Kocher 1 unter Wärmezufuhr $Q_k$ erhitzt, wobei bei hohem Druck wasserhaltige Kältemitteldämpfe z.B. Ammoniakdämpfe ausgetrieben werden. In einem den Kocher 1 anschließenden Rektifikator 2 werden die ausgetriebenen Kältemitteldämpfe verstärkt. Der dafür erforderliche Rücklauf in den Rektifikator 2 wird durch mit einem Zwischenkühler 6 versehenen lösungsgekühlten Gegenstromdephlegmator 3, 4 erzeugt. Die sehr hoch angereicherten Kältemitteldämpfe 5 werden in einem Kondensator 7 unter Wärmeabfuhr $Q_c$ niedergeschlagen und in einem Kondensatsammler 8 gesammelt und in einem nachgeschalteten Wärmetauscher 9 unterkühlt. Am Ausgang des Wärmetauschers 9 ist eine Kältemitteldrossel 10 vorgesehen, mit der der Zufluß des Kältemittels in einen Verdampfer 11 geregelt wird. Unter Wärmezufuhr $Q_o$ aus einer Anergiequelle verdampft das Kältemittel im Verdampfer 11 und strömt über eine Leitung 18 durch den Wärmetauscher 9 zu einen Absorber 13.

7.2287
05.03.1985

In den Absorber 13 gelangt gleichzeitig arme Lösung, die über eine Lösungsrückführung 16 aus dem Kocher 1 entnommen, durch einen zweiten Wärmetauscher 15 und eine Lösungsdrossel 17 zu den Absorber 13 geführt wird. Im Absorber 13 wird die arme Lösung unter Wärmeabfuhr $Q_a$ auf eine reichere Konzentration angereichert. Der Lösungskreislauf wird mit der Zuleitung 19 dieser angereicherten Lösung in den Kocher geschlossen.

Die Zuleitung 19 für die angereicherte Lösung wird zweistufig über die Dephlegmatoren geführt, wobei zwischen den beiden Dephlegmatorstufen 3 und 4 die angereicherte Lösung über einen Zwischenkühler 6 geleitet wird. Der Zwischenkühler 6 ist gegenüber dem Kondensator 7 so angeordnet, daß ein Kühlmedium 20, Luft oder Wasser zuerst den Kondensator 7 durchströmt und im Anschluß daran den Zwischenkühler 6 unter Aufnahme von Wärme $Q_z$ kühlt. Nach der zweiten Dephlegmatorstufe 3 gelangt die angereicherte Lösung über den zweiten Wärmetauscher 15 in den Kocher 1.

Die Regelung des Arbeitsprozesses erfolgt über die Kältemitteldrossel 10, die Lösungsdrossel 17 für die Rückführung der armen Lösung, den Zwischenkühler 6 und einen Leistungsregler 21 für den Kocher 1. Die Lösungsdrossel 17 wird entsprechend der Auslegung der Kältemitteldrossel 10 fest eingestellt. Die Kältemitteldrossel 10 wird in Abhängigkeit der Temperatur des aus dem Verdampfer austretenden Kühlmitteldampfes gesteuert, wobei jeweils soviel Kondensat in den trockenen Verdampfer 11 eingespritzt wird, daß am Austritt 12 des Verdampfers noch eine geringe Überhitzung der Dämpfe bezogen auf das reine Kältemittel vorhanden ist. Zur Regelung der Kocherheizleistung ist ein Temperaturschalter 17 vorgesehen, der mittels eines am Ausgang des Dephlegmators 4 angeordneten

0195279

Temperaturfühlers 23 die Temperatur des Kältemitteldampfes 5 mißt und die Wärmezufuhr zum Kocher 1 bei einer
bestimmten oberen Dampftemperatur unterbricht und sie nach
dem Absinken auf eine niedrigere Schwelle wieder freigibt.

Ein am Ausgang 12 des Verdampfers 11 angeordneter
Überhitzerfühler 22 registriert eine Erhöhung des Verdampfer- und Absorberdruckes, wenn infolge einer Erhöhung
der Kondensator- bzw. Absorber Kühltemperatur $t_c$ bzw.
$t_a$ eine geringere Wärmeabfuhr oder aufgrund einer Erhöhung
der Kocherheizleistung $Q_k$ eine erhöhte Wärmezufuhr in den
Prozeß erfolgt. In so einem Fall wird die Kältemittelzufuhr in den Verdampfer 11 mit der Kältmitteldrossel 10
verringert, wobei sich das Kältemittel im Kondensatsammler
8 speichert. Durch diese Verlagerung von flüssigem Kältemittel in den Kondensatsammler 8 wird dem Kreislauf so viel
Kältemittel entzogen, daß sich die Verdampfungstemperaturen
auf einen entsprechend den Verdampfungsbedingungen notwendigen niedrigen Wert einstellen. Dies wird dadurch
bewirkt, weil sich die Prozeßkonzentrationen zur Absorbentenkonzentration hin solange verlagern, bis am Verdampferausgang wieder eine geringe Überhitzung auftritt.
Dabei sinkt auch der Absorberdruck und der Verdampferdruck, so daß sich der Prozeß von selbst wieder stabilisiert. Diese Regelung findet ebenfalls beim Absinken
des Temperaturniveaus $t_o$ der Wärmeeinkopplung $Q_o$ am
Verdampfer statt.

Erniedrigt sich dagegen die Kondensator- bzw. Absorberkühltemperatur $t_c$ bzw. $t_a$ oder die Heizleistung $Q_k$ bzw.
erhöht sich das Temperaturniveau $t_o$ des Verdampfers 11,
so wird durch die Kältemitteldrossel 10 entsprechend
mehr Kältemittel aus dem Kältemittelsammler 8 in den Kreislauf zurückgeführt, bis dieser sich wieder im Gleichgewichtszustand befindet.

7.2287
05.03.1985

Auch überlagerte Änderungen von mehreren äußeren Randbedingungen werden durch die Kältemitteldrosselung prozeßseitig durch entsprechende Kältmittelverlagerung optimal ausgeregelt. Dabei lassen sich kurzzeitige Ausfälle der Kocherheizleistung z.B. bei solarbeheizten Kochern oder beim Takten bei festen Brennerleistungen durch die Verschiebung der Prozeßkonzentrationen größenteils überbrücken.

Durch die Regelung der Kocherheizleistung $Q_k$ wird die Anlage bei sehr ungünstigen Randbedingungen nicht abgeschaltet, sondern durch das Ansteigen der Dampftemperatur 5 wird die Anlage in einen Taktbetrieb weiterbetrieben und solange, bis sich die Randbedingungen wieder in die vorgegebenen zulässigen Grenzen geändert haben, so daß die Anlage wieder kontinuierlich weiterläuft. Damit ist eine Störungssicherheit der Anlage gegeben. Bei einer Erhöhung der Kocherheizleistung $Q_k$ wird infolge der Vergrößerung der Entgasungsbreite die vorstehend erwähnte Verlagerung von Kältemittel in den Kondensatsammler 8 bewirkt. Alle Regelvorgänge erfolgen selbsttätig, so daß bei jeder Änderung einer den Prozeß beeinflussenden Größe der dadurch aus dem Gleichgewicht gebrachte Arbeitsprozeß rasch wieder stabilisiert wird.

Schließlich wird durch den Zwischenkühler 6 ebenfalls die erforderliche Kühlleistung im Dephlegmator 3, 4 entsprechend den Prozeßbedingungen geregelt. Durch die Anordnung des Zwischenkühlers 6 am Kondensatoraustritt 7 wird auch bei Teillast nur der notwendige Rücklauf zum Rektifikator 2 erzeugt. Die notwendigen hohen Kältemittel-Dampfkonzentrationen im Kältekreis werden durch den Zwischenkühler 6 auch bei ungünstigen Bedingungen erreicht, weil die stark ansteigende Dephlegmationswärme durch den Zwischenkühler 7 noch abgeführt werden kann.

7.2287
05.03..1985

Die vorstehend beschriebenen selbsttätigen Regeleingriffe führen zu einer koordinierten Regelung eines Absorptions- und in entsprechender Weise eines Resorptionsprozesses derart, daß bei Änderungen von äußeren Randbedingungen stets ein wirtschaftlicher und sicherer Betrieb der Anlage möglich ist.

7.2287
05.03.1985

0195279

M.A.N. MASCHINENFABRIK AUGSBURG-NÜRNBERG
Aktiengesellschaft
gü/sd


München, 05. März 1985


P a t e n t a n s p r ü c h e


1. Verfahren zur Regelung von Sorptions-Kälteanlagen oder- Wärmepumpen mit einem Kältemittel-
und einem Lösungskreislauf sowie mit einem Kühlmediumkreislauf, der einen Kondensator und einen
Absorber durchströmt, bei dem zur Anpassung an
den Leistungsbedarf die Kältemittelzufuhr zum
Verdampfer in Abhängigkeit des Zustandes im
Verdampfer und der Rücklauf der armen Lösung
zum Absorber geregelt werden und wobei zur
Kühlung der aus dem Austreiber aufsteigenden
Kältemitteldämpfe die angereicherte Lösung aus
dem Absorber verwendet wird und die Kocherleistung anpaßbar ist, dadurch gekennzeichnet,
daß die Kältemittelzufuhr zum Verdampfer (11)
sowie der Rücklauf (16) der armen Lösung in den
Absorber (13) derart geregelt werden, daß am
Verdampferaustritt (12) eine geringfügige
Oberhitzung bezogen auf das reine Kältemittel aufrechterhalten wird, daß die Kocherleistung ($Q_k$)
in Abhängigkeit der Temperatur $T_d$ des Kältemitteldampfes (5) geregelt wird und daß die

7.2287

Kühlung der Kältemitteldämpfe mit der angereicherten Lösung in zwei Stufen (4, 3) erfolgt, wobei eine Zwischenkühlung (6) der Lösung mittels des dem Kondensator (7) durchströmten Kühlmediums (20) durchgeführt wird.

2. Sorptions-Kälteanlage bzw.- Wärmepumpe mit einem kühlmediumgekühlten Absorber, einen lösungsgekühlten Dephlegmator und einem Kocher mit Lösungsrückführung und mit einem einen Verdampfer und kühlmediumgekühlten Kondensator durchströmenden Kältemittelkreislauf, wobei im Rücklauf der armen Lösung zum Absorber eine Lösungsdrossel und im Zulauf des Kältemittels in den Verdampfer eine Kältemitteldrossel vorgesehen ist, dadurch gekennzeichnet, daß zur Durchführung des Verfahrens nach Anspruch 1 am Austritt (12) des Verdampfers (11) ein der Kältemitteldrossel (10) zugeordneter Überhitzerfühler (22) vorgesehen ist und der Kältemitteldrossel ein Kondensatsammler (8) vorgeschaltet ist, daß die Lösungsdrossel (17) fest eingestellt ist derart, daß in Verbindung mit der Kältemitteldrosselregelung eine geringfügige Überhitzung der vom Verdampfer (11) austretenden Dämpfe aufrechterhalten wird, ferner daß der Dephlegmator (3, 4) zweistufig ausgebildet ist und daß ein bezogen auf das Kühlmedium (20) dem Kondensator (7) nachgeschalteter kühlmediumgekühlter Zwischenkühler (6) für die angereicherte Lösung vorgesehen ist, der im Zulauf (19) der angereicherten Lösung zwischen den beiden Dephlegmatorstufen zwischengeschaltet ist, außerdem daß ein Temperaturschalter (17) zur Regelung der Kocherheizleistung ($Q_k$) vorgesehen ist, der einen Temperaturfühler für den aus dem Kocher (1) austretenden Kältemitteldampf (5) hat.

7.2287
05.03.1985